Europäisches Patentamt

European Patent Office

Office européen des brevets

(11) Veröffentlichungsnummer: **0 190 589**
**A1**

(12) **EUROPÄISCHE PATENTANMELDUNG**

(21) Anmeldenummer: 86100639.3

(22) Anmeldetag: 20.01.86

(51) Int. Cl.⁴: **D 21 F 1/00**

(30) Priorität: 22.01.85 DE 3501981

(43) Veröffentlichungstag der Anmeldung:
13.08.86 Patentblatt 86/33

(84) Benannte Vertragsstaaten:
AT BE CH DE FR GB IT LI NL SE

(71) Anmelder: Hermann Wangner GmbH & Co KG
Föhrstrasse 39
D-7410 Reutlingen(DE)

(72) Erfinder: Borel, Georg, Dipl.-Ing.
Kurt-Schumacher-Strasse 101/83
D-7410 Reutlingen 1(DE)

(74) Vertreter: Abitz, Walter, Dr.-Ing. et al,
Abitz, Morf, Gritschneder, Freiherr von Wittgenstein
Postfach 86 01 09
D-8000 München 86(DE)

(54) Spiralgliederband mit geschützten Kanten.

(57) Das Spiralgliederband (1) z.B. für die Papierherstellung weist eine Vielzahl von zueinander parallelen Spiralen (2) auf, wobei die Windungen aufeinanderfolgender Spiralen (2) reißverschlußartig ineinandergreifen und durch die von den ineinandergreifenden Windungen gebildeten Kanäle Steckdrähte eingeschoben sind. Die Bandkanten (5) sind durch eine Schutzhülle (6) aus einem Gewebe abgedeckt, das um die Bandkanten (5) geschlagen ist und an dem Spiralgliederband (1) befestigt ist. Die Schutzhülle (6) kann doppellagig sein und eine 7- oder 8-schäftige Bindung aufweisen, wobei die Längsfäden (7) über vier oder fünf Querfäden (8) bzw. Querfädenpaare geführt sind.

FIG.5

Spiralgliederband mit geschützten Kanten

B e s c h r e i b u n g

Die Erfindung betrifft ein Spiralgliederband z.B. für
die Papierherstellung, das eine Vielzahl von zueinander
parallelen Spiralen aufweist. Die Windungen aufeinanderfolgender Spiralen sind reißverschlußartig ineinandergefügt und durch die Kanäle, die von den ineinandergreifenden Windungen gebildet werden, sind Steckdrähte eingeschoben, die die aufeinanderfolgenden Spiralen gelenkig
verbinden.

Derartige Spiralgliederbänder sind aus der DE-AS 24 19 751,
der DE-OS 29 38 221 und der EP-A-0 018 200 bekannt. Die
Spiralen bestehen in der Regel aus Polyester-Kunststoffmonofilen. Die Spiralgliederbänder werden als Transport-
und Filterbänder eingesetzt, in jüngster Zeit insbesondere auch in Papiermaschinen, vorwiegend in der Trockenpartie, wo sie die gebildete, jedoch noch feuchte Papierbahn zwischen den einzelnen beheizten Trockenzylindern
führen und an sie anpressen. Durch den Anpreßdruck verbessert sich die Wärmeübertragung in die feuchte Papierbahn und somit auch die Trocknungswirkung.

Bei den hohen Geschwindigkeiten moderner Papiermaschinen
von 800 bis 1000 m/min und bei manchen Maschinen noch
höher entstehen innerhalb der Trockenpartie erhebliche
Luftströmungen, weil die Luft durch die Oberfläche der schnell rotierenden Trockenzylinder und auch durch die Trockensiebe bzw. Trockenbänder selbst mitgerissen wird. Im keilförmigen Spalt, wo z.B. ein Trocken-Spiralgliederband auf einen Trockenzylinder aufläuft, entsteht ein erheblicher Überdruck durch diese Luftströmungen. Da die Spiralgliederbänder eine sehr offene Struktur haben, drängen die Luftströmungen durch die Spiralgliederbänder hindurch, wodurch die Papierbahn vom Spiralgliederband abgehoben wird, so daß es zum Flattern und in extremen Fällen sogar zum Abreißen der Papierbahn kommt. Um diesem Problem entgegenzuwirken, versucht man, die Innenräume der Spiralen mit zusätzlichem Fadenmaterial zu füllen. Die Füllung besteht aus monofilen oder multifilen Fäden, siehe DE-OS 30 39 873, DE-OS 31 35 140 und FR 24 94 318.

Bei Trockensieben kommt es manchmal vor, daß Siebe während des Betriebes die seitlich angebrachten stationären Elemente der Maschine streifen. Dadurch wird der Siebrand bei diesen hohen Arbeitsgeschwindigkeiten rasch zerstört. Während die beiden Oberflächen des Siebes glatt sind und aus vorwiegend in Längsrichtung gerichteten Schenkeln der Spiralen bestehen, ist die Siebkante seitlich rauh. Sie besteht aus abgeschnittenen Drähten der Spiralen und ebenfalls quer hierzu mündenden Steckdrähten. Dies erklärt, warum die Kante, sobald sie bei hoher Geschwindigkeit gegen die Stuhlung der Maschine anstößt, in kürzester Zeit zerstört wird. Dabei gehen die Spiralen des Bandes von der Kante aus auf. Das gleiche geschieht, wenn auch langsamer, an den Tasterrollen der Bandlaufregler. Da die Bänder sehr schwer sind, werden die Taster mit hohem Druck bewegt, bis die Walze vom Laufregler in die erforderliche Position gebracht wird. Auch hierdurch werden die Ränder der Trockenbänder erheblich strapaziert.

Zur Behebung dieser Schwierigkeiten werden die Ränder der

0190589

Spiralgliederbänder verklebt, d.h., sie werden auf eine bestimmte Breite mit einer aushärtenden Kunststoffmasse ausgefüllt, wie in der Figur 7 der EP-A-0 052 350 gezeigt wird. Zum Teil wird die Kunststoffmasse jedoch nach einem längeren Einsatz bei hohen Temperaturen und hoher Feuchtigkeit spröde und bröckelt aus. Die Kunststoffmasse kann auch nicht verhindern, daß die Ränder des Trockenbandes bei Berührung mit den stationären Elementen zerstört werden und die Spiralen aufgehen. Sobald die Kante beschädigt wird und sich öffnet, schlupfen die in die Spiralen eingeschobenen Fülldrähte aus dem Spiralgliederband seitlich heraus.

Um dem abzuhelfen, werden gemäß EP-A-0 052 350 speziell geformte Drahtschlingen oder Drahtspiralen in die Öffnungen der Spiralen seitlich eingeschoben. Gemäß Fig. 2 dieser Druckschrift wird die Kante noch zusätzlich durch einen längsverlaufenden Draht verstärkt, welcher durch die Drahtschlingen gehalten wird. Die hervorstehenden Enden der eingeführten Schlingen können dabei auch noch durch einen längsverlaufenden Saum miteinander verbunden werden.

Diese Verstärkung der Kante hat sich nicht vollständig bewährt, weil wegen der sehr geringen Abmessungen der Zwischenräume der Wendeln die Schlingen nicht sauber gebildet und eingeführt werden können und weil die eingeführten Schlingen bei der hohen Geschwindigkeit dann wieder aus dem Spiralband herausgeschleudert werden. Auch, wenn zusätzlich die übliche Verklebung des Randes mit der Kunststoffmasse vorgesehen wird, halten die Schlingen nur solange, wie die Kunststoffmasse in einwandfreiem Zustand ist. Die Schlingen bilden dabei eine Armierung oder Verstärkung der Kante innerhalb der Kunststoffmasse.

0190589

Aus der DE-OS 33 15 696 ist es bekannt, die Siebränder durch ein senkrecht zu den Steckdrähten verlaufendes Schutzglied zu schützen, das z.B. aus einem Stahldraht oder Kunststoffdraht besteht, der seitlich entlang der Kante geführt wird und mit Drähten an das Spiralband angebunden ist.

Beim Laufen des Spiralgliederbandes gegen die Stuhlung der Maschine können die seitlich hervorstehenden Drahtschlingen jedoch zerstört werden, wodurch das Schutzglied frei wird, und nur noch solange mitläuft, bis es an einem der stationären Elemente hängenbleibt und durch das endgültige Aufreißen der Kante das Trockenband unbrauchbar macht. Wenn die Kante zusätzlich in eine Kunststoffmasse eingebettet wird, steht die Kunststoffmasse dennoch in direktem Kontakt mit der heißen Oberfläche der Trockenzylinder, und ist gleichfalls dem Alterungsvorgang ausgesetzt.

Der Erfindung liegt die Aufgabe zugrunde, ein Spiralgliederband zu schaffen, bei dem die Kanten gegen seitlichen Abrieb geschützt sind und zur besseren Betätigung der Reglersysteme versteift sind.

Zur Lösung dieser Aufgabe sind die Bandkanten erfindungsgemäß durch eine Schutzhülle aus einem Gewebe abgedeckt, das um die Bandkanten geschlagen ist und an dem Spiralgliederband befestigt ist.

Das Gewebe, das die Schutzhülle bildet, kann einlagig oder doppellagig ausgebildet sein. Vorzugsweise besitzt es eine doppellagige Bindung aus paarweise übereinander angeordneten, querverlaufenden Drähten, die mit einem System in Längsrichtung verlaufender Drähte verwoben sind. Besonders vorteilhaft ist eine 7- oder 8-schäftige

0190589

Bindung, bei der die Längsfäden an der Außenseite über 4 oder 5 Paare von Querfäden geführt sind. Dadurch entsteht eine ausgesprochene Längsstruktur, die das Vorbeigleiten des Spiralgliederbandes bei Berührung der stationären Maschinenelemente erleichtert. Die Schutzhülle hat dabei sowohl an der Oberseite, als auch an der Unterseite und auch seitlich eine kontinuierliche, gleichmäßige Längsstruktur.

Das Gewebe der Schutzhülle ist vorzugsweise aus Polyester-Monofil hergestellt, wobei sowohl die Längsdrähte als auch die Querdrähte vorzugsweise aus einer Drahttype mit sehr niedrigem Elastizitätsmodul bestehen, wie sie z.B. für Querfäden von Blattbildungssieben verwendet wird. Dadurch wird erreicht, daß die Schutzhülle der im Gebrauch üblicherweise auftretenden Längung des Spiralgliederbandes folgen kann. Durch die Materialauswahl und die Webart der Schutzhülle ist dafür zu sorgen, daß keine wesentliche Dehnungs- oder Schrumpfungsunterschiede zwischen dem Spiralgliederband und der aufgenähten Schutzhülle auftreten. Hierbei ist zu berücksichtigen, daß Trockensiebe bis auf 160°C aufgeheizt werden.

Das Spiralgliederband kann jedoch auch aus anderen hydrolysebeständigen Kunststoffdrähten hergestellt werden, z.B. Polyamid- oder Polypropylendrähten.

Die Schutzhülle wird zweckmäßig auf einer Bandwebmaschine hergestellt. Die Befestigung der Schutzhülle am Siebrand kann durch Vernähen erfolgen, wobei es die Längsstruktur der Außenfläche der Schutzhülle ermöglicht, den Nähfaden in die Vertiefung zwischen zwei auf der Außenfläche der Schutzhülle liegenden Längsdrähten zu legen. Es besteht ferner die Möglichkeit, einzelne oder mehrere nebeneinanderliegende Längsdrähte in regelmäßigen Abständen in der Gewebestruktur der Schutzhülle auszulassen und in die dadurch gebildeten tiefen Rillen den Nähfaden zu legen. Diese Längsdrähte können bereits beim Weben weggelassen werden oder können nach dem Fixieren entfernt werden. Das Entfernen der Längsdrähte geschieht auf der Oberseite und auf der Unterseite der Schutzhülle an der gleichen Stelle, so daß mit einer technischen Nähmaschine eine äußerst haltbare Verbindung geschaffen werden kann. Dadurch, daß die Befestigung der Schutzhülle an dem Spiralgliederband nicht seitlich an den Kanten erfolgt, sondern einige Zentimeter einwärts versetzt ist, kann die Naht selbst nicht an den Maschinenelementen streifen und ist sie keinem erhöhten Verschleiß ausgesetzt. Die Schutzhülle soll möglichst eng um die Bandkanten herumgeführt sein.

Es besteht die Möglichkeit, das Spiralgliederband im Randbereich in an sich bekannter Weise durch eine Kunststoffmasse auszufüllen und zu verkleben, um die Lebensdauer des Spiralgliederbandes weiter zu erhöhen. Es genügt dabei im allgemeinen, wenn die Ausfüllung der Bandkante in einer Breite von 25 bis 30 mm erfolgt.

Der Bereich der Verklebung deckt sich dabei in etwa mit der Breite der Schutzhülle, so daß die Schutzhülle die Kunststoffmasse vor einer Berührung mit den heißen Oberflächen der Trockenzylinder bewahrt. Die Kunststoffmasse versprödet dadurch langsamer und altert nicht so schnell.

Die durch die Erfindung erzielbaren Vorteile bestehen insbesondere darin, daß die Kante des Spiralgliederbandes durch die Schutzhülle vor Verschleiß und Zerstörung durch die stationären Maschinenelemente geschützt wird und daß das Spiralgliederband an den Rändern thermisch weniger belastet wird. Dies ist wichtig, da die Randbereiche eines Spiralgliederbandes außerhalb der schützenden

Papierbahn liegen und daher thermisch stärker belastet werden als der mittlere Bereich. Während Spiralgliederbänder üblicherweise aus dem relativ wärmeempfindlichen Polyestermaterial hergestellt werden, da sich andere Kunststoffe schlechter zu Spiralen wickeln lassen, kann die gewobene Schutzhülle aus thermisch belastbarerem Material, z.B. Polypropylen, hergestellt werden. Durch die Schutzhülle werden auch die Randbereiche des Spiralgliederbandes vor einer unmittelbaren Berührung mit den heißen Oberflächen der Trockenzylinder bewahrt.

Die Luftdurchlässigkeit des Spiralgliederbandes kann im Randbereich durch die aufgeschobene Schutzhülle nach Bedarf verringert werden. Die Schutzhülle kann dabei mit unterschiedlicher Kettdichte gewoben werden, z.B. in der Weise, daß die Kettdichte an der Kante besonders hoch ist, während sie zur Mitte des Spiralgliederbandes hin graduell abnimmt.

Ein Ausführungsbeispiel der Erfindung wird nachfolgend anhand der Zeichnung erläutert. Es zeigen:

Fig. 1 den Randbereich eines Spiralgliederbandes mit aufgeschobener Schutzhülle;

Fig. 2 und 3 den Verlauf der Längsfäden bei einer 7- bzw. 8-schäftigen Bindung des Gewebes der Schutzhülle;

Fig. 4 den Verlauf der Querdrähte bei einer Bindung nach Fig. 3 und

Fig. 5 einen Schnitt durch den Randbereich eines Spiralgliederbandes in Querrichtung.

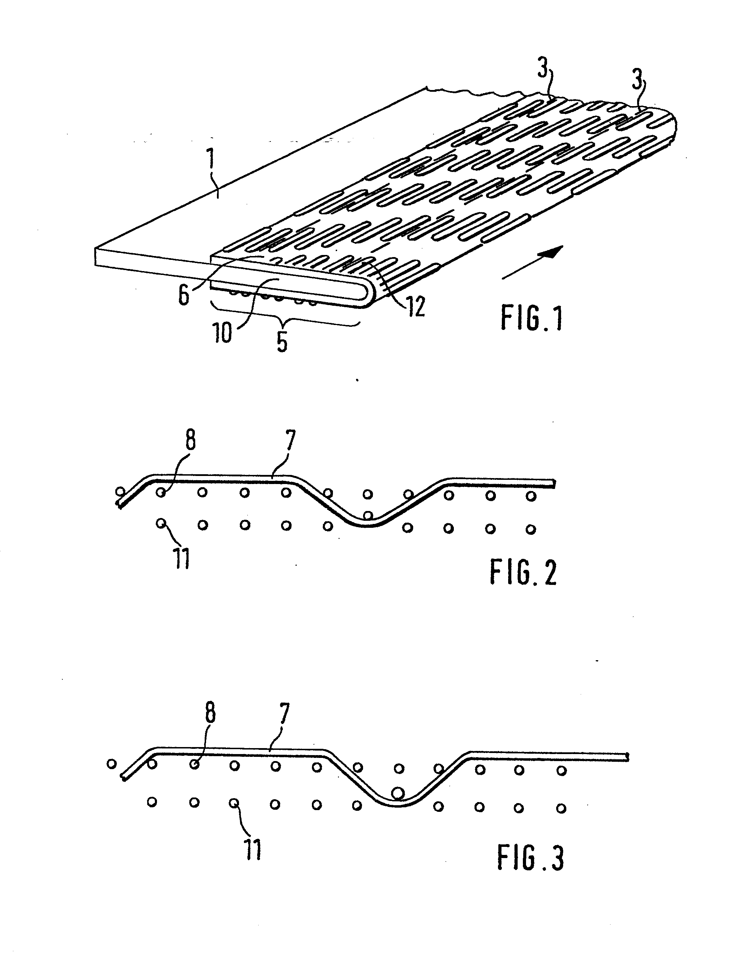

In Fig. 1 ist schematisch ein Spiralgliederband 1 dargestellt, auf dessen Kante 5 eine Schutzhülle 6 aufgeschoben ist. Das Spiralgliederband ist beispielsweise von der in der DE-OS 30 39 873 beschriebenen Art und ist daher in seiner Struktur nicht detailliert dargestellt. Der Pfeil in Fig. 1 zeigt die Lauf- oder Längsrichtung des Spiralgliederbandes an. Die Schutzhülle 6 ist um die Kante 5 des Spiralgliederbandes 1 geschlagen, so daß der Randbereich des Spiralgliederbandes 1 auf der Oberseite und auf der Unterseite durch die Schutzhülle 6 abgedeckt wird. Die Schutzhülle 6 ist durch eine Naht 3, die durch das Spiralgliederband 1 hindurch die auf der Oberseite bzw. der Unterseite liegenden Flächen der Schutzhülle 6 befestigt, mit dem Spiralgliederband verbunden. Die Schutzhülle 6 kann auch auf den Rand des Spiralgliederbandes 1 aufgeklebt werden.

Die Figuren 2 und 3 zeigen im Schnitt in Längsrichtung den Verlauf der Längsdrähte des Gewebes der Schutzhülle 6. Die Längsdrähte 7 laufen dabei über vier bzw. fünf Querdrähte 8 der oberen Lage und binden dann mit einem Querdraht 11 der unteren Lage ab. Dadurch entstehen auf der Oberseite lange Flottierungen 12, die auf der Außenseite der Schutzhülle 6 in Längsrichtung liegen und das Vorbeigleiten der Kante des Spiralgliederbandes an den stationären Maschinenelementen erleichtert.

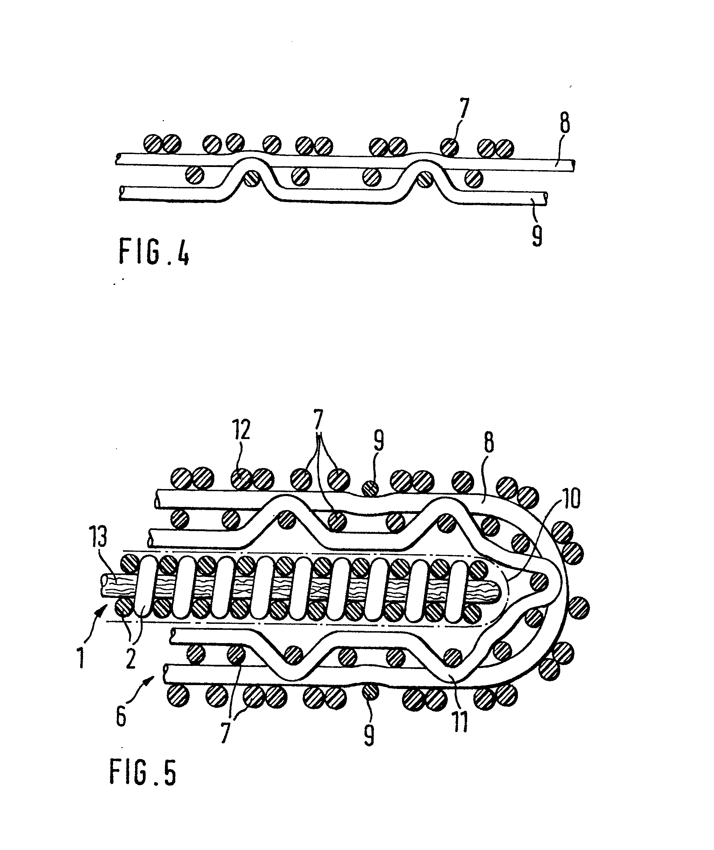

Fig. 4 zeigt einen Schnitt durch das Gewebe von Fig. 3 in Querrichtung. Auch hier erkennt man, daß die Längsfäden 7 die Außenfläche, das ist in Fig. 4 die Oberseite, bilden.

Fig. 5 zeigt einen Schnitt in Querrichtung durch das Gewebe der Schutzhülle 6, wobei ein Längsfaden 7 durch einen Nähfaden 9 ersetzt ist. Der Nähfaden 9 ist etwas dünner als die Längsfäden 7. Der Nähfaden 9 verbindet die Schutzhülle 6 mit dem Spiralgliederband. Er wird dadurch tiefer in das Gewebe hineingezogen, so daß er im Gewebe versteckt und vor Abrieb weitgehend geschützt ist.

In Fig. 5 ist ferner der Randbereich des Spiralgliederbandes dargestellt, wobei teilweise auch die Kunststoffmasse 10 angedeutet ist, die im Randbereich zusätzlich das Füllmaterial 13 schützt, damit sich herausstehende Enden des Füllmaterials 13 nicht an den stationären Maschinenelementen verfangen können.

Beispiel:

Das Spiralgliederband besteht aus Spiralen mit 7 Windungen/cm, die aus Polyester-Monofil von 0,7 mm Durchmesser gewickelt sind. Die Polyester-Type ist hydrolysebeständig. Die Steckdrähte bestehen aus hydrolysebeständigem Polyester-Monofil von 0,9 mm Durchmesser. Die Steckdrähte liegen im Siebgliederband in Abständen von 5 mm.

Das Gewebe der Schutzhülle hat eine achtschäftige, doppellagige Bindung, wobei der Kettverlauf so wie in Fig. 3 gezeigt ist. Die Bindung hat eine Atlas-Verteilung mit Steigungszahl 3. Das Gewebe ist aus 30 Kettfäden pro cm mit 0,32 mm Durchmesser und 2 x 12 Schußdrähten pro cm von 0,32 mm Durchmesser gewebt. Die Kette verläuft in Längsrichtung, und die Kettdrähte und die Schußdrähte sind aus der hydrolysebeständigen, dehnungsfreudigen Drahttype mit der Handelsbezeichnung "Trevira 900 C", die normalerweise nur als Schußdraht für Papiermaschinensiebe verwendet wird.

Das Gewebe für die Schutzhülle wird bei hoher Temperatur fixiert, jedoch ohne Spannung, so daß es sich bei der Fixierung nicht längt. Dadurch wird ein Schrumpfen des Gewebes bei Erwärmung in der Trockenpartie vermieden. Das Gewebe der Schutzhülle ist dehnungsfreudig und dehnt sich mit dem Spiralgliederband im Einsatz.

Das Spiralgliederband wird ebenfalls in der üblichen Weise thermofixiert.

Die Schutzhülle wird dann oben und unten in einer Breite von jeweils 12 cm auf die Kante des fertig ausgerüsteten Spiralgliederbands aufgenäht, wozu über die obere und untere Seite der Schutzhülle verteilt, je 4 Kettdrähte beim Weben ausgelassen worden sind. Das endlose Spiralgliederband befindet sich gestreckt zwischen zwei Walzen der Ausrüstungsmaschine und bewegt sich beim Vernähen langsam in Längsrichtung. Angebrachte Kantenfühler sichern, daß die Naht genau entlang der Rinne an der Stelle der ausgelassenen Kettdrähte verläuft. Die Nahtspur wird an der Oberseite und der Unterseite des Spiralgliederbandes durch Video-Kameras kontrolliert, so daß die Bedienungsperson der Nahtmaschine auf zwei Monitorschirmen bei starker Vergrößerung den richtigen Verlauf der Nahtfäden beobachten und gegebenenfalls korrigieren kann.

Die Schutzhülle kann das Spiralgliederband oben und unten auch in unterschiedlicher Breite abdecken, z.B. auf der Papierseite 40 cm und auf der anderen Seite nur 8 cm, somit reicht die Schutzhülle bis in die Bahnbreite der Papierbahn hinein und beeinflußt den Trocknungsvorgang der Papierbahn. Die große Breite der Schutzhülle kann sich auch auf der Rückseite befinden und die kleine Breite auf der Papierseite.

Patentansprüche

1. Spiralgliederband z.B. für die Papierherstellung
mit einer Vielzahl von zueinander parallelen Spiralen,
wobei die Windungen aufeinanderfolgender Spiralen
reißverschlußartig ineinandergreifen und durch die
von den ineinandergreifenden Windungen gebildeten
Kanäle Steckdrähte eingeschoben sind, dadurch g e -
k e n n z e i c h n e t , daß die Bandkanten (5)
durch eine Schutzhülle (6) aus einem Gewebe abgedeckt
sind, das um die Bandkanten (5) geschlagen ist und an
dem Spiralgliederband (1) befestigt ist.

2. Spiralgliederband nach Anspruch 1, dadurch g e -
k e n n z e i c h n e t , daß das Gewebe der Schutzhülle (6) doppellagig ist.

3. Spiralgliederband nach Anspruch 1 oder 2, dadurch
g e k e n n z e i c h n e t , daß das Gewebe der
Schutzhülle (6) eine 7- oder 8-schäftige Bindung
aufweist, wobei die Längsfäden (7) über vier oder
fünf Querfäden (8) bzw. Querfädenpaare geführt sind.

4. Spiralgliederband nach einem der Ansprüche 1 bis 3,
dadurch g e k e n n z e i c h n e t , daß das
Gewebe der Schutzhülle (6) aus Polyester-Monofil mit
niedrigem Elastizitätsmodul gebildet ist.

5. Spiralgliederband nach einem der Ansprüche 1 bis 4,
dadurch g e k e n n z e i c h n e t , daß die
Schutzhülle an der Bandkante festgenäht ist, wobei
der Nähfaden (9) in Längsrichtung des Spiralgliederbandes (1) verläuft und in dem durch das Auslassen
eines oder mehrerer Längsfäden (7) des Gewebes der
Schutzhülle (6) entstandenen freien Zwischenraum liegt.

6. Spiralgliederband nach einem der Ansprüche 1 bis 5, dadurch g e k e n n z e i c h n e t , daß der Innenraum der Spiralen (2) im Bereich der Kanten (5) durch eine Kunststoffmasse (10) ausgefüllt ist.

0190589

FIG.1

FIG.2

FIG.3

FIG.4

FIG.5

0190589

Europäisches
Patentamt

| | **EINSCHLÄGIGE DOKUMENTE** | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | US-A-2 234 247 (GUBA) <br><br> --- | | D 21 F 1/00 |
| A,D | EP-A-0 052 350 (COFPA) <br><br> --- | | |
| D,A | FR-A-2 494 318 (COFPA) <br><br> --- | | |
| D,A | EP-A-0 124 040 (WÜRTTEMBERGISCHE FILZTUCHFABRIK D. GESCHMAY) <br><br> ----- | | |
| | | | **RECHERCHIERTE SACHGEBIETE (Int Cl 4)** <br><br> D 21 F <br> B 65 G |
| | Der vorliegende Recherchenbericht wurde für alle Patentansprüche erstellt. | | |

| Recherchenort <br> DEN HAAG | Abschlußdatum der Recherche <br> 15-05-1986 | Prüfer <br> DE RIJCK F. |
|---|---|---|